# EUROPÄISCHE PATENTSCHRIFT

(11) **EP 3 121 497 B1**
(45) Veröffentlichungstag und Bekanntmachung des Hinweises auf die Patenterteilung: **15.01.2020**
(21) Anmeldenummer: 16178678.5
(22) Anmeldetag: 08.07.2016
(51) Int. Cl.: F16K 47/08, F16K 1/42, F16J 15/02, F16J 15/3212, F16J 15/3236

(54) **STELLVENTIL ZUM EINSTELLEN EINER PROZESSFLUIDSTRÖMUNG EINER PROZESSTECHNISCHEN ANLAGE**
CONTROL VALVE FOR ADJUSTING A PROCESS FLUID FLOW OF A TECHNICAL PROCESS PLANT
VANNE DE REGULATION PERMETTANT DE REGLER UN FLUX DE FLUIDE DE PROCEDE D'UNE INSTALLATION DE PROCESSUS TECHNIQUE

(30) Priorität: 20.07.2015 DE 102015009421
(43) Veröffentlichungstag der Anmeldung: 25.01.2017
(73) Patentinhaber: Samson Aktiengesellschaft, 60314 Frankfurt (DE)
(72) Erfinder: Bräuer, Anke, 63526 Erlensee (DE)
(74) Vertreter: Schmid, Nils T.F.

(56) Entgegenhaltungen:
- EP-A1- 0 591 873
- EP-B1- 1 800 040
- NL-A- 7 115 333
- US-A- 2 722 232
- US-A- 2 772 068
- US-A- 4 108 210
- US-A- 4 155 536
- US-A- 4 658 847
- US-A1- 2010 301 253

## Beschreibung

Die Erfindung betrifft im Allgemeinen ein Stellventil zum Einstellen einer Prozessfluidströmung einer prozesstechnischen Anlage, im Besonderen ein Stellventil einer prozesstechnischen Anlage, wie einer Brauerei, einer petrochemischen Anlage, einer Nuklearanlage, einer prozesstechnischen Anlage mit Explosionsschutzauflagen, oder dergleichen.

Ein Stellventil der gattungsgemäßen Art dient dazu, eine Prozessfluidströmung der prozesstechnischen Anlage einzustellen. Dabei kann das Stellventil einen pneumatischen Stellungsregler zugeordnet sein, der mittels einer pneumatischen Hilfsenergie einen pneumatischen Antrieb steuert, der das Stellventil in die gewünschte Stellposition verbringt.

Das Stellventil hat ein Ventilgehäuse, das einen Einlass, einen Auslass und ein sich dazwischen entlang einer Längsachse erstreckenden Durchgang aufweist, durch den das Prozessfluid strömen soll. Ein Ventilglied, wie ein Ventilkegel, ist im Ventilgehäuse verschiebbar gelagert, um den Durchgang entsprechend der Einstellung durch den Stellungsregler zu weiten, zu verengen oder zu schließen. Innerhalb des Ventilgehäuses ist eine Ventilkomponente separat montiert, dabei kann die Ventilkomponente der tatsächliche Ventilsitz, an dem das Ventilglied beim Schließen des Durchgangs in Anschlag kommt, oder ein Ventilkäfig sein, der eine definierte Durchflussströmung durch den Durchgang festlegt. Da eine Leckage zwischen der Ventilkomponente und dem Ventilgehäuse zu vermeiden ist, ist bekannt, eine ringnutförmige Dichtungsaufnahme zwischen dem Ventilgehäuse und der Ventilkomponente vorzusehen, in der eine Dichtung eingesetzt ist. Die Dichtungsaufnahme wird durch die Ventilkomponente und das Ventilgehäuse begrenzt.

Ein derartiges Stellventil ist beispielsweise aus EP 1 800 040 B1 bekannt und hat ein Ventilgehäuse aus einem Material mit einem ersten Wärmeausdehnungskoeffizienten, an dem eine Ventilkomponente bestehend aus einem Material mit einem zweiten unterschiedlichen Wärmeausdehnungskoeffizienten anzubringen ist. Gerade bei unterschiedlichen Ausdehnungsverhalten bei Temperaturunterschieden kommt es auf eine ausreichend gute Dichtung an, die auch eine Relativbewegung zwischen den abzudichtenden Strukturkomponenten ausgleichen kann. Um die Relativbewegung des Ventilgehäuses und der Ventilkomponente zu kompensieren, ist die Dichtungsaufnahme zusätzlich mit einer Halteeinrichtung versehen, die den Dichtring innerhalb der Dichtungsaufnahme in einer axial festgelegten Position hält. Die Halteeinrichtung kann entsprechend der verschiedenen Ausführungen entweder durch einen zusätzlichen Haltering, wie einen Sprengring, oder durch eine Nutaussparung in dem Ventilgehäuse oder der Ventilkomponente ausgebildet sein. Bei einer weiteren Ausführung sind zusätzlich anzuschraubende Halteringelemente vorgesehen, die einen axialen Anschlag für die Dichtung bereitstellen. Alle Ausführungsvarianten von EP 1 800 040 B1 haben gemeinsam, eine Dichtungsaufnahmebegrenzung oder eine Dichtungshalterung, die in beide Axialrichtungen wirk-sam ist, entweder durch das Ventilgehäuse oder die Ventilkomponente zu realisieren. Dies birgt zwar Vorteile bei der dichtungsverletzungsfreien Montage des Dichtungskörpers, allerdings bedarf es bei dieser Konstruktion eines erhöhten Konstruktionsaufwands, insbesondere um die Haltefunktion für die Dichtung zu realisieren.

US 2,722,232 betrifft ein Rückschlagventil. EP 0 591 873 offenbart ein Steuerungsventil. Gemäß US 4,155,536 ist eine Ventilsitzanordnung eines Kugelventils bekannt. US 2010/0301253 betrifft eine Ventilsitzanordnung für ein Stellventil. Aus US 4,658,847 geht eine bimetallische C-Ringdichtung hervor. US 4,108,210 offenbart ein Stellventil für eine Fluidströmung. Aus US 2,772,068 geht ein Ventil mit einem bewegbaren Ventilglied zum Steuern einer Fluidströmung hervor. NL 7 115 333 offenbart eine Metalldichtung für einen Steuerschieber.

Es
ist Aufgabe der Erfindung, die Nachteile des Standes der Technik zu überwinden, insbesondere ein Stellventil zum Einstellen einer Prozessfluidströmung einer prozesstechnischen Anlage bereitzustellen, deren konstruktive Realisierung der Dichtungsaufnahme vereinfacht ist, insbesondere eine eigene Halteeinrichtung für die Dichtung nicht benötigt wird.

Diese Aufgabe wird durch die Merkmale von Anspruch 1 gelöst.

Danach ist ein Stellventil zum Einstellen einer Prozessfluidströmung einer prozesstechnischen Anlage vorgesehen, das insbesondere durch einen pneumatischen Stellungsregler betätigt wird, der beispielsweise ein pneumatisches Stellsignal nach einer Soll-/Istwertanalyse an einen pneumatischen Antrieb abgibt, der das Stellventil betätigen soll. Das Prozessfluid stellt häufig eine hohe Gefahr für Umwelt und Mensch dar, so dass es eine Hauptaufgabe ist, das Stellventil so zu konstruieren, dass aggressive Medien auch bei unterschiedlichen Betriebslasten, wie großen Temperaturspannen, nicht austreten. Das Stellventil ist Teil einer Prozessfluidleitung der prozesstechnischen Anlage und umfasst ein Ventilgehäuse, das einen Einlass für den Eintritt der Prozessfluidströmung in das Ventilgehäuse und einen Auslass aufweist. Zwischen dem Einlass und Auslass erstreckt sich entlang einer Längsachse des Ventilgehäuses ein Durchgang, dessen Durchgangsquerschnitt ein Ventilglied durch Stellen entsprechend Weiten und Verengen kann. Das Ventilglied kann mit einer ventilgehäusefesten Ventilkomponente zusammenarbeiten, die erfindungsgemäß als Ventilkäfig mit einem Ventilsitz gebildet ist. Der Ventilkäfig kann den Ventilsitz mitumfassen.

Die Ventilkomponente ist ein in Bezug auf das Ventilgehäuse separat hergestelltes Bauteil und ist an dem Ventilgehäuse zu montieren. Um ein Ausströmen des Prozessfluids zwischen Ventilkomponente und Ventilgehäuse zu vermeiden, ist eine ringnutförmige Dichtungsaufnahme vorgesehen, die insbesondere ausschließlich von der Ventilkomponente und dem Ventilgehäuse strukturell begrenzt ist. In die Dichtungsaufnahme ist eine Dichtung eingesetzt, um eine Leckage zu vermeiden. Erfindungsgemäß formen sowohl die Ventilkomponente als auch der Ventilgehäuseabschnitt jeweils einen in Radialrichtung vorstehenden Absatz zur Bildung der ringnutförmigen Dichtungsaufnahme, wobei beide Absätze jeweils die Dichtungsaufnahme in einer Axialrichtung begrenzen. Es ist möglich, die Dichtungsaufnahme durch vier Seitenwänden zu begrenzen, wobei die vier Seitenwände hälftig (2:2) von der Ventilkomponente und von dem Ventilgehäuse gebildet werden. Erfindungsgemäß gibt es kein dominantes Bauteil zwischen der Ventilkomponente und dem Ventilgehäuse, der zur Bildung der Dichtungsaufnahme dient. Beide, die Ventilkomponente und das Ventilgehäuse bilden jeweils eine umlaufende Dichtlinie und begrenzen den Dichtungsraum in Axialrichtung und vorzugsweise auch in Radialrichtung, wo die entsprechenden Dichtungslinien realisiert sind. Neben der einfachen Montage ist der Aufwand der Fertigung deutlich reduziert, wobei eine zusätzliche Halteeinrichtung für die Dichtung, wie auch immer sie ausgeführt sein mag, unnötig ist. Es zeigte sich des Weiteren, dass die Dichtungsfunktion auch bei starken Temperaturschwankungen gut erhalten bleibt, weil der Dichtung innerhalb der Dichtungsaufnahme ein Ausweichbewegungsbereich zur Verfügung steht, der insbesondere von der Dichtung benutzt werden kann, wenn starke, aufgrund von Temperaturunterschieden einhergehende Bewegungen zwischen dem Ventilgehäuse und der Ventilkomponente einhergehen. Die Dichtung kann ein einzelner Dichtungsring beispielsweise gebildet aus Kunststoffmaterial, wie Elastomermaterial oder Thermoplastmaterial sein oder aus einem elastisch-starren Material, wie Metall, sein, oder gebildet aus einer Strukturkombination aus einem Kunststoffmaterial, wie einem Elastomermaterial, und einem Vorspannelement bestehen, das in Richtung der Dichtungsflächen Vorspannkräfte erzeugt, die im Kontaktbereich, wo das dichtende Kunststoffmaterial positioniert ist, wirken.

Erfindungsgemäß ist die Dichtungsaufnahme in Radialrichtung durch jeweils eine umlaufende, insbesondere zylindrische Begrenzungswand der Ventilkomponente und des Ventilgehäuses begrenzt. Dabei können die Begrenzungswände idealzylindrisch, insbesondere zwischen dem Absatz und einem absatzfreien Axialende ausgebildet sein, also ohne jegliche Vertiefung insbesondere zum Fixieren der Dichtung. Vorzugsweise sind die Begrenzungswände konzentrisch zueinander und/oder in Bezug auf die Längsachse angeordnet, wobei ein Radialabstand zwischen den konzentrischen Begrenzungswände die Radialweite des ringnutförmigen Dichtungsaufnahmeraums festlegt. Der Querschnitt der Dichtungsaufnahme, der insbesondere in Umfangsrichtung unveränderlich ist, kann durch rechteckig zueinander stehende, durch die Absätze und die Begrenzungswände definierte Flanken festgelegt sein. Dabei bildet ein senkrecht zueinander stehendes Paar Flanken die Begrenzung der Dichtungsaufnahme durch die Ventilkomponente, das andere Paar Flanken wird durch das Ventilgehäuse gebildet.

Bei einer Weiterbildung der Erfindung ist die Dichtungsaufnahme ausschließlich durch sich zugewandte Radialseitenflächen der Absätze der Ventilkomponente und des Ventilgehäuses in Axialrichtung begrenzt. Insbesondere ist die Dichtungsaufnahme in Radialrichtung ausschließlich durch die sich in Axialrichtung erstreckenden Begrenzungswände begrenzt.

Bei einer Weiterbildung der Erfindung ist zum Montieren der Ventilkomponente an dem Ventilgehäuse die Ventilkomponente teleskopartig bezüglich des Ventilgehäuses in Axialrichtung ineinander verschiebbar. Das teleskopartige Ineinanderschieben der Ventilkomponente und des Ventilgehäuses zueinander ist auch insofern möglich, als das dem jeweiligen Absatz gegenüberliegende freie axiale Ende ohne entsprechenden radial gerichteten Absatz ausgebildet ist. Die teleskopartige Verschiebbarkeit der Ventilkomponente relativ zum Ventilgehäuse kann beispielsweise durch einen Strukturanschlag derart begrenzt sein, dass eine vorbestimmte Axialweite der Dichtungsaufnahme gebildet ist.

Bei einer Weiterbildung der Erfindung sind die jeweiligen Absätze der Ventilkomponente und des Ventilgehäuses jeweils aus einem Stück Material mit dem jeweiligen weiteren benachbarten Bestandteil der Ventilkomponente / des Ventilgehäuses gefertigt. Der Bestandteil kann beispielsweise auch die jeweilige Begrenzungswand bilden. Bei einer besonderen Ausführung der Erfindung unterscheiden sich die Wärmeausdehnungskoeffizienten des Materials für das Ventilgehäuse und des Materials für die Ventilkomponente untereinander. Es sei klar, dass auch gleiche Materialtypen für das Ventilgehäuse und die Ventilkomponente herangezogen werden können. Bei einer alternativen Ausführung können die Absätze auch als separate Scheibenelemente oder anders geformte Bauelemente realisiert sein, die an der Ventilkomponente und/oder an dem Ventilgehäuse separat beispielsweise über Schrauben befestigt sind. Der Absatz und die Ventilkomponente bzw. das Ventilgehäuse bilden eine strukturelle, kraftübertragende Einheit.

Bei einer bevorzugten Ausführung der Erfindung ist die Dichtungsaufnahme in Axialrichtung derart bemessen und die Dichtung im Hinblick auf die Dimensionierung der Dichtungsaufnahme derart angepasst, dass nach Abschluss der Montage der Dichtung in der Dichtungsaufnahme die Dichtung, insbesondere ein elastischer, formbarer Dichtungskörper der Dichtung, zu beiden Absätzen in einem vorzugsweise gleich großen Axialabstand angeordnet ist. Zwischen der Dichtung und dem Axialanschlag ist ein vorzugsweise umlaufender Luftspalt. Es sei klar, dass der Axialabstand in gewissen Betriebssituationen des Stellventils aufgrund einer Bewegung oder Ausdehnung der Dichtung aufgehoben wird und ein Kontakt zwischen der Dichtung und des jeweiligen Absatzes einhergehen kann. Allerdings in einem normalen Betriebszustand oder unmittelbar nach der Montage ist die Dichtung erfindungsgemäß derart anzuordnen, dass eine Kontaktfreiheit zu einem oder beiden Absätzen vorliegt, damit eine Bewegungsfreiheit in eine oder beide Axialrichtungen für die Dichtung zur Verfügung steht.

Des Weiteren können zusätzlich oder alternativ die Dichtungsaufnahme und die Dichtung derart bemessen sein, dass sich die Dichtung, insbesondere ein elastisch verformbarer Dichtungskörper, in beide entgegengesetzte Axialrichtungen (von der Montageposition aus) in der Dichtungsnut sich weiten und/oder bewegen kann, um insbesondere in einem Axialkontakt mit den in Axiallängsrichtung die Dichtungsaufnahme begrenzenden, sich in Radialrichtung erstreckenden Absätzen des Ventilgehäuses und der Ventilkomponente zu kommen. Es sei ebenfalls klar, dass in extremen Betriebssituationen des Stellventils, insbesondere bei starken Ausdehnungseffekten, durchaus ein Axialkontakt zwischen den Absätzen und der Dichtung einhergehen kann. Auf jeden Fall soll der Dichtung, nach Abschluss der Montage, die Möglichkeit gegeben werden, sich in Axialrichtung auszudehnen, um beispielsweise eine Relativbewegung zwischen dem Ventilgehäuse und der Ventilkomponente, die durch Wärme induziert ist, ausgleichen zu können.

Es ist dabei zu beachten, dass die durch die Ventilkomponente und das Ventilgehäuse gebildete Dichtungsaufnahme frei jeder Halteeinrichtung ausgebildet sei, es sei denn, es wird von den Begrenzungswänden und den Absätzen gesprochen. Anders gesagt besteht jede Halteinrichtung der durch die Ventilkomponente und das Ventilgehäuse gebildeten Dichtungsaufnahme ausschließlich aus einer der Begrenzungswände und/oder einem der Absätze.

Vorzugsweise stehen nach Abschluss der Montage der Dichtung letztere in vollständig umlaufendem Dichtungskontakt mit den sich in Axialrichtung erstreckenden Begrenzungswänden der Dichtungswand. Selbst bei Bewegung und/oder Weitung der Dichtung in Axialrichtung, was durch die unterschiedlichen Wärmeausdehnungskoeffizienten des Ventilgehäuses und der Ventilkomponente veranlasst sein kann, bleibt der Dichtungskontakt zwischen den Begrenzungswänden und der Dichtung aufrecht.

Die Summe beider Axialabstände zwischen der Dichtung und den Absätzen sollte vorzugsweise größer als eine axiale Wärmeausdehnung von Ventilkomponente und Ventilgehäuse bei vorbestimmter insbesondere maximaler Betriebstemperaturdifferenz sein, wobei insbesondere die Wärmeausdehnungskoeffizienten von Ventilkomponente und Ventilgehäuse vorzugsweise unterschiedlich und vorbekannt sind. Bei einer möglichen Ausbildung der Erfindung kann der Axialabstand zwischen der Dichtung und dem jeweiligen Absatz unmittelbar nach Montage größer als 0,5 mm oder 1 mm und/oder kleiner als 5 mm oder 3 mm sein.

Der Axialabstand ist vorzugsweise dazu ausgelegt, aufgrund von Temperaturschwankungen einhergehende Bewegungen der Ventilkomponente bzw. des Ventilgehäuses derart auszugleichen, dass eine Kontaktaufnahme der Dichtung mit den Absätzen während der in Betrieb auftretenden Temperaturspanne vermieden wird.

Bei einer Weiterbildung der Erfindung sind in aneinander montiertem Zustand der Ventilkomponente an dem Ventilgehäuse die sich in Radialrichtung erstreckende, ringförmige Dichtungsaufnahme und die in Radialrichtung begrenzenden Begrenzungswände der Ventilkomponente und des Ventilgehäuses zylindrisch und zueinander konzentrisch angeordnet, wobei insbesondere die zylindrischen Wandflächen aussparungsfrei sind, so dass die Dichtung längs der jeweiligen Begrenzungswand verschoben werden kann.

Bei einer Weiterbildung der Erfindung endet eine insbesondere der Ventilkomponente zugeordnete Begrenzungsinnenwand der Dichtungsaufnahme einerseits an dem radial nach außen vorstehenden Absatz und andererseits an einem axialen Ende des die Begrenzungsinnenwand bildende Bauteils, wie der Ventilkomponente oder des Ventilgehäuses, mit einer radial nach innen vorspringenden Stufe. Auf diese Weise ist gewährleistet, dass die Dichtung ungehindert längs der Begrenzungsinnenwand hin zur Dichtungsaufnahme oder zur Dichtungsposition aufgeschoben werden kann.

Alternativ oder zusätzlich kann eine insbesondere dem Ventilgehäuse zugeordnete Begrenzungsaußenwand der Dichtungsaufnahme einerseits an den radial nach innen vorspringenden Absatzenden und andererseits an einem axialen Ende des die Begrenzungsaußenwand bildenden Bauteils, wie des Ventilgehäuses oder der Ventilkomponente mit einer radial nach außen vorspringenden Stufe enden, so dass die Dichtung insbesondere im Wesentlichen ohne radiales Weiten an dem radialen Ende in die Dichtungsaufnahme eingesetzt werden kann.

Bei einer Weiterbildung der Erfindung ist im Anschluss und/oder benachbart der Dichtungsaufnahme jeweils eine Ventilkomponente und ein Ventilgehäuse mit einem Montageabschnitt ausgebildet, der beispielsweise durch ein Gewinde realisiert ist. Der Montageabschnitt dient dazu, die Ventilkomponente fest an dem Ventilgehäuse anzubringen.

Bei einer Weiterbildung der Erfindung hat die Dichtung einen Dichtungskörper in Form eines Dichtrings, der in Umfangsrichtung vollständig umläuft. Der Dichtungsring kann aus einem Kunststoffmaterial, wie einem Elastomermaterial oder einem Thermoplast, wie PTFE, und/oder aus einem Metall, wie Stahl, Aluminium, etc. gebildet sein. Der Dichtungsring kann einen im Wesentlichen O-förmigen, C-förmigen, V-förmigen oder U-förmigen Querschnitt aufweisen.

Des Weiteren kann die Dichtung eine Spreizfeder aus einem starren Material, wie Kunststoff, Metall oder dergleichen aufweisen. Die Spreizfeder soll den Dichtungskörper insbesondere aus Elastomermaterial gegen die Begrenzungswände der Dichtungsaufnahme zur Ausbildung der gewünschten umlaufenden Dichtungslinie oder -fläche elastisch vorspannen. Dabei kann beispielsweise die Spreizfeder einen im Wesentlichen O-förmigen, C-förmigen, V-förmigen oder U-förmigen Querschnitt aufweisen.

Bevorzugte Ausgestaltungen sind in den Unteransprüchen angegeben.

Weitere Vorteile, Eigenschaften und Merkmale werden durch die folgende Beschreibung bevorzugter Ausführungen der Erfindung anhand der beiliegenden Zeichnungen beschrieben, in denen zeigen:
- Fig. 1: eine Querschnittsansicht einer ersten Ausführung des erfindungsgemäßen Stellventils;
- Fig. 2: eine zweite Ausführung des erfindungsgemäßen Stellventils; und
- Fig. 3: eine Querschnittsansicht einer Dichtung, die zwischen dem Ventilgehäuse und der Ventilkomponente anzuordnen ist.

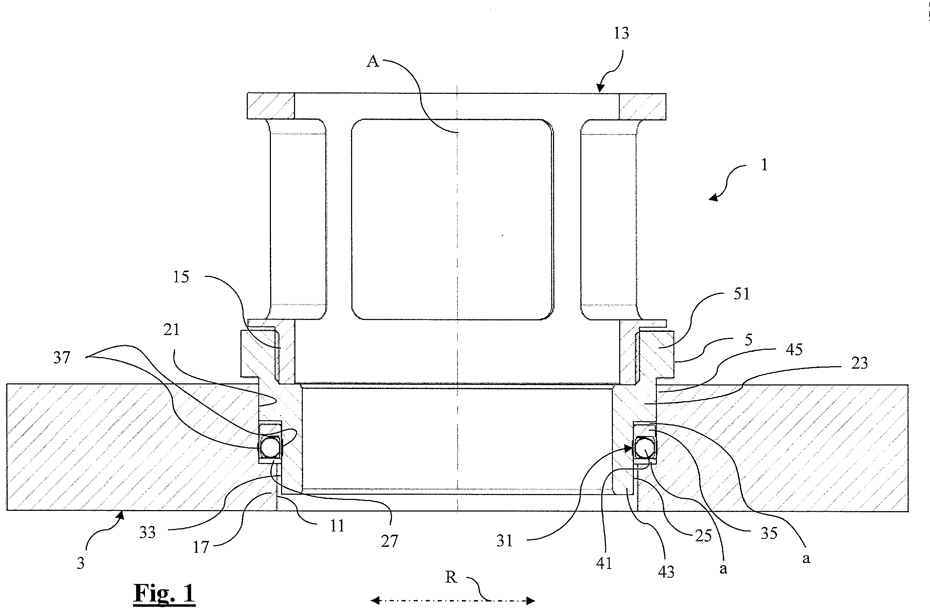

In Fig. 1 ist die erste Ausführung des erfindungsgemäßen Stellventils mit den Hauptkomponenten dargestellt, wobei zur vereinfachten Darstellung nicht das gesamte Ventilgehäuse und auch nicht das Ventilglied des Stellventils näher dargestellt sind. Diese seien aber bei der weiteren Beschreibung zumindest mitgedacht.

In Fig. 1 ist im Allgemeinen das Stellventil mit der Bezugsziffer 1 versehen. Das Stellventil 1 umfasst als Hauptbestandmerkmale einen Ventilgehäuseabschnitt 3 und einen Ventilkäfig 13, an dem der Ventilsitz 5 mittels einer Schraubverbindung 15 befestigt ist. Der Ventilsitz 5 wird über eine entsprechende Öffnung 11 in den Ventilgehäuseabschnitt 3 eingebracht.

Innerhalb des Ventilkäfigs 13 ist das nicht näher dargestellte Ventilglied beweglich gelagert, um den Durchgang (nicht näher dargestellt) des Stellventils zu weiten oder zu verengen, insbesondere vollständig zu schließen.

Der Ventilgehäuseabschnitt 3 ist bezüglich des Ventilsitzes 5 radial außen umgebend angeordnet und umfasst einen radial nach innen weisenden Absatz 17, der hinsichtlich der Ventilgehäusewandstärke zur Außenseite des Stellventils 1 angeordnet ist. Im Anschluss an den Absatz 17 schließt sich eine in Axialrichtung A erstreckende Begrenzungswand 21 an, die zylindrisch ausgeführt ist. Auch die nach innen gewandte Fläche des Absatzes 17 ist idealzylindrisch gebildet.

Der Ventilsitz 5 ist teleskopartig relativ zu der Begrenzungswand 21 in die Öffnung 11 des Ventilgehäuseabschnitts 3 eingeschoben und bildet einen radial nach außen weisenden Absatz 23, der von einer sich in Axialrichtung A erstreckenden Begrenzungsinnenwand 25 radial nach außen vorsteht.

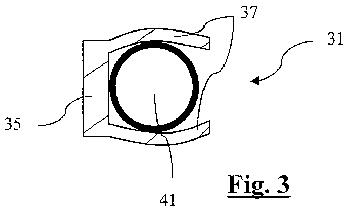

Der Absatz 23 des Ventilsitzes 5 sowie der Absatz 17 des Ventilgehäuseabschnitts 3 begrenzen eine im Querschnitt rechteckförmige Dichtungsaufnahme 27 in der Axialrichtung A, in der eine Dichtung 31 angeordnet ist, damit Prozessfluid nicht längs des Spaltes 33 und der Begrenzungswände 21, 25 austreten kann. Die Dichtung 31, die näher in Fig. 3 dargestellt ist, umfasst einen im Querschnitt gabelförmigen Dichtungskörper 35, der zwei umlaufende Zinken 37 aufweist, die mittels einer radialen Spreizfeder 41 gegen die Begrenzungswände 25, 21 gedrückt werden. Der Dichtungskörper 35 ist aus einem Kunststoffmaterial, wie einem Elastomermaterial oder einem Thermoplast, wie PTFE, gebildet, während die Spreizeinrichtung durch einen Metallring gebildet sein kann. Hierzu könnte ein Metallring vorgesehen werden, der im Querschnitt eine O-Form, C-Form, U-Form oder V-Form aufweist.

Wie in Fig. 1 ersichtlich ist, wird die Dichtungsaufnahme 27 in Axialrichtung A sowohl von dem Ventilsitz 5 als auch von dem Ventilgehäuseabschnitt 3 strukturell (aufgrund der Absätze 17, 23) begrenzt. In Radialrichtung R wird die Dichtungsaufnahme 27 durch die zylindrische Begrenzungsaußenwand 21 und Begrenzungsinnenwand 25 begrenzt.

Des Weiteren ist in Fig. 1 ersichtlich, dass die Dichtung 31 zentral innerhalb der Dichtungsaufnahme 27 derart angeordnet ist, dass sich je ein Axialabstand a zu den Seitenflanken der Absätze 23 bzw. 17 bildet. Vorzugsweise sind die Axialabstände a gleich groß und erlauben eine Beweglichkeit der Dichtung 31 relativ zu dem Ventilsitz und/oder dem Ventilgehäuseabschnitt 3. Die Summe beider Axialabstände sollte größer sein als die Wärmeausdehnungsdifferenz (bei unterschiedlichen Wärmeausdehnungskoeffizienten) von Ventilsitz 5 und Ventilgehäuseabschnitt 3. Der Axialabstand a kann beispielsweise wenigstens 0,5 mm oder 1 mm sein, je nachdem wie die Durchmesser des Stellventils 1 gebildet sind. Der Axialabstand a kann ausgelegt sein, die 5 mm oder 3 mm je nach Durchmesser des Stellventils 1 nicht zu überschreiten.

Da der Ventilsitz 5 sowie der Ventilgehäuseabschnitt 3 unterschiedliche Wärmeausdehnungskoeffizienten aufweisen können, kann sich eine axiale Relativbewegung zwischen beiden Bauteilen realisieren, welche aufgrund der anschlagsfreien Axialanordnung der Dichtung 31 innerhalb der Dichtungsaufnahme leicht ausgeglichen werden kann, wobei eine einfache Montage der Dichtung 31 über die axialen freien Enden 43 des Ventilsitzes oder die freien axialen Enden 45 des Ventilgehäuseabschnitts 3 realisiert werden kann. Ein Spreizen der Dichtung 31 zum Überwinden der axialen Enden ist nicht notwendig.

Vorzugsweise kann die Dichtung 31 bezüglich einer der beiden Begrenzungswände 25, 21 unter- bzw. überdimensioniert sein, um eine radiale Vorspannung des elastischen Spreizelements 41 der umlaufenden Dichtungsflächen auf einer der Begrenzungswände 21, 25 bereitzustellen.

An dem ins Stellventilgehäuseinnere ragenden Abschnitt 51 des Ventilsitzes 5 ist, wie oben dargestellt, mittels einer Verschraubung der Ventilkäfig 13 befestigt, wobei der Abschnitt 51 des Ventilsitzes 5 ein Innengewinde aufweist und der Käfig an dem entsprechenden Abschnitt ein Außengewinde.

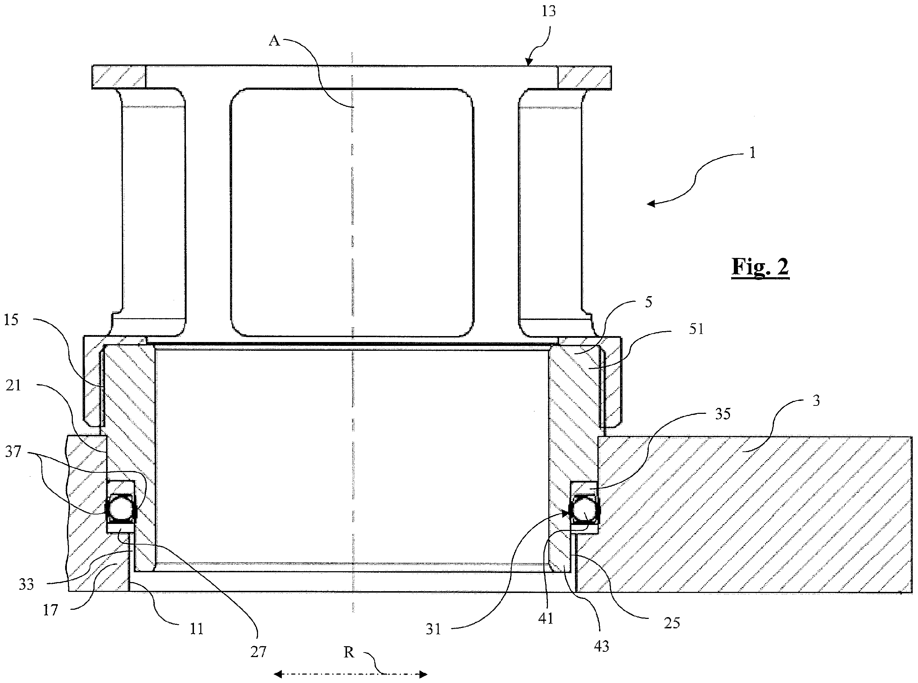

Die Ausführung nach Fig. 2 unterscheidet sich von der nach Fig. 1 lediglich in der Anschraubung des Ventilkäfigs 13 an dem Ventilsitz 5, indem der Abschnitt 51 des Ventilsitzes 5 ein Außengewinde aufweist und der Ventilkäfig 13 an dem entsprechenden Abschnitt ein Innengewinde, so dass für die gleichen oder identischen Bauteile die gleichen Bezugsziffern wie in Fig. 1 verwendet werden, um die Lesbarkeit der Figurenbeschreibung zu erleichtern.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Stellventil
- 3: Ventilgehäuseabschnitt
- 5: Ventilsitz
- 11: Öffnung
- 13: Ventilkäfig
- 15: Schraubverbindung
- 17, 23: Absatz
- 21: Begrenzungsaußenwand
- 25: Begrenzungsinnenwand
- 27: Dichtungsaufnahme
- 31: Dichtung
- 35: Dichtungskörper
- 37: Zinken
- 41: Spreizfeder
- 43, 45: freie Enden
- 51: Abschnitt

- a: Axialabstand
- A: Axialrichtung
- R: Radialrichtung

## Patentansprüche

1. Stellventil (1) zum Einstellen einer Prozessfluidströmung einer prozesstechnischen Anlage, umfassend:
- ein Ventilgehäuse, das einen Einlass, einen Auslass und einen sich zwischen dem Einlass und dem Auslass entlang einer Längsachse erstreckenden Durchgang aufweist;
- einen an das Ventilgehäuse zu montierenden Ventilkäfig (13) mit einem Ventilsitz (5);
- eine ringnutförmige Dichtungsaufnahme (27), die von dem Ventilsitz (5) und dem Ventilgehäuse begrenzt ist; und
- eine in die Dichtungsaufnahme (27) eingesetzte Dichtung (31);
wobei sowohl der Ventilsitz (5) als auch das Ventilgehäuse jeweils einen in Radialrichtung (R) vorstehenden Absatz (17, 23) zur Bildung der ringnutförmigen Dichtungsaufnahme (27) formen, wobei beide Absätze (17, 23) jeweils die Dichtungsaufnahme (27) in einer Axialrichtung (A) begrenzen, wobei in einem normalen Betriebszustand oder unmittelbar nach der Montage die Dichtung (31) in der Dichtungsaufnahme (27) derart angeordnet ist, dass eine Kontaktfreiheit zu wenigstens einem Absatz (17, 23) vorliegt, wobei die Dichtungsaufnahme (27) in Radialrichtung (R) durch eine umlaufende Begrenzungsinnenwand (25) des Ventilsitzes (5) und eine umlaufende Begrenzungsaußenwand (21) des Ventilgehäuses begrenzt ist.

2. Stellventil (1) nach Anspruch 1, **dadurch gekennzeichnet, dass** die Dichtungsaufnahme (27) in Radialrichtung (R) durch umlaufende zylindrische Begrenzungswände des Ventilsitzes (5) und des Ventilgehäuses begrenzt ist, die konzentrisch zur Längsachse angeordnet sind, wobei ein Querschnitt der Dichtungsaufnahme (27), der in Umfangsrichtung unveränderlich ist, durch rechteckig zueinander stehende, durch die Absätze und die Begrenzungswände definierte Flanken festgelegt ist.

3. Stellventil (1) nach Anspruch 1 oder 2, **dadurch gekennzeichnet, dass** die Dichtungsaufnahme (27) ausschließlich durch sich zugewandte Radialseitenflächen der Absätze (17, 23) des Ventilsitzes (5) und des Ventilgehäuses in Axialrichtung (A) begrenzt ist, und insbesondere in Radialrichtung (R) ausschließlich durch die sich in Axialrichtung (A) erstreckenden Begrenzungswände.

4. Stellventil (1) nach einem der vorstehenden Ansprüche, dadurch **gekennzeich-n et**, dass zum Montieren des Ventilkäfigs an dem Ventilgehäuse der Ventilkäfig teleskopartig bezüglich des Ventilgehäuses in Axialrichtung (A) derart weit ineinander verschiebbar ist, dass eine vorbestimmte Axialweite der Dichtungsaufnahme (27) gebildet ist.

5. Stellventil (1) nach einem der vorstehenden Ansprüche, dadurch **gekennzeich**- **n et**, dass die jeweiligen Absätze (17, 23) des Ventilsitzes (5) und des Ventilgehäuses jeweils aus einem Materialstück mit dem jeweiligen weiteren benachbarten Bestandteil, der insbesondere die jeweilige Begrenzungswand bildet, gefertigt sind, wobei insbesondere sich die Wärmeausdehnungskoeffizienten des Materials für das Ventilgehäuse und des Materials für den Ventilsitz (5) unterscheiden.

6. Stellventil (1) nach einem der vorstehenden Ansprüche, dadurch **gekennzeich**- **n et**, dass die Dichtungsaufnahme (27) in Axialrichtung (A) derart bemessen und die Dichtung im Hinblick auf die Dimensionierung der Dichtungsaufnahme (27) derart ausgeführt ist, dass nach Abschluss der Montage der Dichtung (31) in der Dichtungsaufnahme (27) die Dichtung (31), insbesondere ein elastisch verformbarer Dichtungskörper (35), zu beiden Absätzen in einem Axialabstand angeordnet ist.

7. Stellventil (1) nach einem der vorstehenden Ansprüche, dadurch **gekennzeich**- **n et**, dass in einem normalen Betriebszustand oder unmittelbar nach der Montage die Dichtung (31) in der Dichtungsaufnahme (27) derart angeordnet ist, dass eine Kontaktfreiheit zu beiden Absätzen (17, 23) vorliegt.

8. Stellventil (1) nach einem der vorstehenden Ansprüche, dadurch **gekennzeich-n et**, dass die Dichtungsaufnahme (27) in Axialrichtung (A) derart bemessen und die Dichtung im Hinblick auf die Dimensionierung der Dichtungsaufnahme (27) derart ausgeführt ist, dass nach Abschluss der Montage der Dichtung (31) in der Dichtungsaufnahme (27) die Dichtung (31), insbesondere ein elastisch verformbarer Dichtungskörper (35), in beide entgegengesetzte Axialrichtungen (A) in der Dichtungsaufnahme (27) sich weiten und/oder bewegen kann, ohne in einen Axialkontakt mit den in axialer Längsrichtung die Dichtungsaufnahme (27) begrenzenden, sich in Radialrichtung erstreckenden Absätzen des Ventilgehäuses und des Ventilsitzes (5) zu kommen, wobei insbesondere nach Abschluss der Montage der Dichtung (31) letztere in vollständig umlaufenden Dichtungskontakt mit den beiden Begrenzungswänden steht, wobei bei Bewegung und/oder Weitung der Dichtung (31) in Axialrichtung (A) der Dichtungskontakt aufrechtgehalten bleibt.

9. Stellventil (1) nach einem der vorstehenden Ansprüche, dadurch **gekennzeichn et**, dass die Summe beider Axialabstände über eine Wärmeausdehnungsdifferenz bei unterschiedlichen Wärmeausdehnungskoeffizienten von Ventilsitz (5) und Ventilgehäuse insbesondere bei festgelegter Betriebstemperaturdifferenz bestimmt ist.

10. Stellventil (1) nach einem der vorstehenden Ansprüche, **dadurch gekennzeichnet, dass** im aneinander montierten Zustand des Ventilkäfigs an dem Ventilgehäuse die sich in Radialrichtung erstreckende ringnutförmige Dichtungsaufnahme (27) und die in Radialrichtung (R) begrenzenden Begrenzungswände des Ventilsitzes (5) und des Ventilgehäuses zylindrisch und zueinander konzentrisch angeordnet sind, wobei insbesondere die zylindrischen Wandflächen aussparungsfrei sind, so dass die Dichtung (31) längs der jeweiligen Begrenzungswand verschoben werden kann.

11. Stellventil (1) nach einem der vorstehenden Ansprüche, dadurch **gekennzeich-n et**, dass eine insbesondere dem Ventilsitz (5) zugeordnete Begrenzungsinnenwand (25) der Dichtungsaufnahme einerseits an dem radial nach außen vorspringenden Absatz endet und andererseits an einem axialen Ende des die Begrenzungsinnenwand (25) bildenden Bauteils, wie des Ventilsitzes (5) oder des Ventilgehäuses, mit einer radial nach innen vorspringenden Stufe endet, sodass die Dichtung (31) an dem axialen Ende in die Dichtungsaufnahme (27) eingesetzt werden kann, und/oder dass eine insbesondere dem Ventilgehäuse zugeordnete Begrenzungsaußenwand (21) der Dichtungsaufnahme (27) einerseits an dem radial nach innen vorspringenden Absatz (17) endet und andererseits an einem axialen Ende des die Begrenzungsaußenwand (21) bildenden Bauteils, wie des Ventilgehäuses oder des Ventilsitzes (5), mit einer radial nach außen vorspringenden Stufe endet, sodass die Dichtung (31) insbesondere im Wesentlichen ohne radiales Weiten an dem axialen Ende in die Dichtungsaufnahme (27) eingesetzt werden kann.

12. Stellventil (1) nach einem der vorstehenden Ansprüche, dadurch **gekennzeich-n et**, dass im Anschluss und/oder benachbart der Dichtungsaufhahme (27) jeweils an dem Ventilsitz (5) und dem Ventilgehäuse ein Montageabschnitt ausgebildet ist, um den Ventilkäfig an dem Ventilgehäuse fest anzubringen.

13. Stellventil (1) nach einem der vorstehenden Ansprüche, dadurch **gekennzeich-n et**, dass die Dichtung einen Dichtungskörper (35) in Form eines Dichtungsrings aus einem Polymermaterial, wie PTFE, und/oder aus einem Metall aufweist, wobei insbesondere der Dichtungsring einen im Wesentlichen O-förmigen, C-förmigen, V-förmigen oder U-förmigen Querschnitt aufweist, wobei insbesondere die Dichtung (31) eine Spreizfeder (41) aus einem starren Material, wie Kunststoff, Metall oder dergleichen, umfasst, die den Dichtungskörper gegen Begrenzungswände der Dichtungsaufnahme (27) zur Ausbildung einer umlaufende Dichtungslinie elastisch vorspannt, wobei insbesondere die Spreizfeder (41) einen im Wesentlichen O-förmigen, C-förmigen, V-förmigen oder U-förmigen Querschnitt aufweist.

## Claims

1. Control valve (1) for setting a process fluid stream of a processing plant, comprising:
- a valve housing including an inlet, an outlet and an aperture extending between the inlet and the outlet along a longitudinal axis;
- a valve cage (13) to be mounted on the valve housing with a valve seat (5);
- an annular-groove-shaped seal reception (27) which is confined by the valve seat (5) and the valve housing; and
- a seal (31) inserted into the seal reception (27);
wherein both the valve seat (5) as well as the valve housing each form a ledge (17, 23) protruding in a radial direction (R) for realizing the annular-groove-shaped seal reception (27), wherein both ledges (17, 23) each confine the seal reception in one axial direction (A), wherein the seal (31) is arranged in the seal reception (27) in a normal operating condition or immediately after the assembly that a contact-freeness is present regarding at least one ledge (17, 23), wherein the seal reception (27) is confined in the radial direction (R) by a circumferential confinement inner wall (25) of the valve seat (5) and a circumferential confinement outer wall (21).

2. Control valve (1) according to claim 1, **characterized in that** the seal reception (27) is confined in the radial direction (R) by circumferential cylindrical confinement walls of the valve component and the valve housing, which are in arranged concentrically with respect to the longitudinal axis, wherein a cross section of the seal reception (27), which is constant in circumferential direction, is determined by flanks which are arranged rectangular relative to one another and which are defined by the ledges and the confinement walls.

3. Control valve (1) according to claim 1 or 2, **characterized in that** the seal reception (27) is confined in the axial direction (A) exclusively by radial side faces of the ledges (17, 23) of the valve component and the valve housing, the radial side faces facing one another, and in particular in the radial direction (R) exclusively by the confinement walls extending in the axial direction (A).

4. Control valve (1) according to one of the preceding claims, **characterized in that** for mounting the valve cage on the valve housing, the valve component is adapted to be telescopically moveable relative to the valve housing in the axial direction (A) into one another so far that a predetermined axial width of the seal reception (27) is formed.

5. Control valve (1) according to one of the preceding claims, **characterized in that** the respective ledges (17, 23) of the valve seat (5) and of the valve housing each are made of one piece of material together with the respective further adjacent component, which in particular forms the respective confinement wall, wherein in particular the respective coefficients of thermal expansion of the material for the valve housing and of the material for the valve seat (5) differ from one another.

6. Control valve (1) according to one of the preceding claims, **characterized in that** the seal reception (27) is dimensioned in the axial direction (A) such that, and **in that** the seal is configured regarding the dimensioning of the seal reception (27) such that after completion of assembly of the seal (31) in the seal reception (27), the seal (31), in particular an elastically deformable sealing body (35), is arranged with an axial clearance to both ledges.

7. Control valve (1) according to one of the preceding claims, **characterized in that** in a normal operating condition or immediately after the assembly, the seal (31) is arranged in the seal reception (27) such that it is contact free with respect to at least one ledge (17, 23), preferably to both ledges (17, 23).

8. Control valve (1) according to one of the preceding claims, **characterized in that** the seal reception (27) is dimensioned in the axial direction (A) such that, and **in that** the seal is configured regarding the dimensioning of the seal reception (27) such that after completion of assembly of the seal (31) in the seal reception (27), the seal (31), in particular an elastically deformable sealing body (35), can dilate and/or move in both opposite axial directions (A) in the seal reception (27) without coming into an axial contact with the ledges of the valve housing and of the valve component, which ledges extend in the radial direction and confine the seal reception (27) in the axial direction, wherein in particular after completion of assembly of the seal (31) the latter stands in a completely circumferential sealing contact with both confinement walls, wherein during movement and/or dilation of the seal (31) in the axial direction (A) the sealing contact remains maintained.

9. Control valve (1) according one of the preceding claims, **characterized in that** the sum of both axial distances is determined by a difference of thermal expansion at different coefficients of thermal expansion of the valve seat (5) and of the valve housing, in particular at a predetermined operating temperature difference.

10. Control valve (1) according to one of the preceding claims, **characterized in that** in the state of the valve cage being mounted to the valve housing, the annular-groove-shaped seal reception (27) which extends in the radial direction and the confinement walls of the valve seat (5) and of the valve housing which extent in the radial direction (R) are arranged cylindrically and concentrically with respect to each other, wherein in particular the cylindrical wall faces are free of recesses such that the seal (31) is moveable along the respective confinement wall.

11. Control valve (1) according to one of the preceding claims, **characterized in that** an inner confinement wall (25), which is in particular associated with the valve seat (5), of the seal reception on the one side ends at the radially outwardly protruding ledge and on the other side ends at an axial end of the member, such as the valve component or the valve housing, realizing the inner confinement wall (25), with a radially inwardly protruding step, such that the seal (31) can be inserted into the seal reception (27) at the axial end, and/or **in that** an outer confinement wall (21), which is in particular associated with the valve housing, of the seal reception (27) on the one side ends at the radially inwardly protruding ledge (17) and on the other side ends at an axial end of the component realizing the outer confinement wall (21), such as a valve housing or the valve component, with a radially outwardly protruding step, such that the seal (31) can be inserted, in particular essentially without radial dilation, into the seal reception (27) at the axial end.

12. Control valve (1) according to one of the preceding claims, **characterized in that** a mounting section is formed following and/or adjacent to the seal reception (27) on the valve seat (5) and on the valve housing, respectively, to firmly mount the valve cage to the valve housing.

13. Control valve (1) according to one of the preceding claims, **characterized in that** the seal includes a sealing body (35) in form of a sealing ring made of an polymer material, such as PTFE, and/or of a metal, wherein in particular the sealing ring has an essentially O-shaped, C-shaped, V-shaped or U-shaped cross section, wherein in particular the seal (31) comprises a spreading spring made of a rigid material, such as plastic, metal, or the like, which elastically pretensions the sealing body against the confinement walls of the seal reception (27) for forming a circumferential sealing line, wherein in particular the spreading spring (41) has an essentially O-shaped, C-shaped, V-shaped or U-shaped cross section.

## Revendications

1. Soupape de réglage (1) pour le réglage d'un flux de fluide de processus d'une installation industrielle, comprenant :
- un boîtier de soupape présentant une entrée, une sortie et un passage s'étendant le long d'un axe longitudinal entre l'entrée et la sortie ;
- une cage de soupape (13) destinée à être montée sur le boîtier de soupape, avec un siège de soupape (5) ;
- un logement de joint d'étanchéité en forme de rainure annulaire (27), lequel est délimité par le siège de soupape (5) et le boîtier de soupape ; et
- un joint d'étanchéité (31) placé dans le logement de joint d'étanchéité (27) ;
dans laquelle aussi bien le siège de soupape (5) que le boîtier de soupape forment respectivement un gradin (17, 23) faisant saillie dans une direction radiale (R) pour définir le logement de joint d'étanchéité en forme de rainure annulaire (27), les deux gradins (17, 23) délimitant respectivement le logement de joint d'étanchéité (27) dans une direction axiale (A), dans laquelle le joint d'étanchéité (31) est disposé de telle façon dans le logement de joint d'étanchéité (27) dans un état de fonctionnement normal ou immédiatement après le montage, qu'une liberté de contact avec au moins un gradin (17, 23) est assurée, dans laquelle le logement de joint d'étanchéité (27) est délimité dans la direction radiale (R) par une paroi intérieure de délimitation périphérique (25) du siège de soupape (5) et par une paroi extérieure de délimitation périphérique (21) du boîtier de soupape.

2. Soupape de réglage (1) selon la revendication 1, **caractérisée en ce que** le logement de joint d'étanchéité (27) est délimité dans la direction radiale (R) par des parois de délimitation cylindriques périphériques du siège de soupape (5) et du boîtier de soupape, lesquelles sont disposées de façon concentrique par rapport à l'axe longitudinal, dans laquelle une section transversale du logement de joint d'étanchéité (27), invariable dans la direction circonférentielle, est définie par des flancs disposés de façon rectangulaire les uns par rapport aux autres et définis par les gradins et les parois de délimitation.

3. Soupape de réglage (1) selon la revendication 1 ou 2, **caractérisée en ce que** le logement de joint d'étanchéité (27) est délimité dans la direction axiale (A) exclusivement par des surfaces latérales radiales, tournées les unes vers les autres, des gradins (17, 23) du siège de soupape (5) et du boîtier de soupape, et en particulier dans la direction radiale (R) exclusivement par les parois de délimitation s'étendant dans la direction axiale (A).

4. Soupape de réglage (1) selon l'une des revendications précédentes, **caractérisée en ce que** pour le montage de la cage de soupape sur le boîtier de soupape, la cage de soupape peut être enfoncée de façon télescopique dans la direction axiale (A) dans le boîtier de soupape au point de former une largeur axiale prédéfinie du logement de joint d'étanchéité (27).

5. Soupape de réglage (1) selon l'une des revendications précédentes, **caractérisée en ce que** les gradins (17, 23) respectifs du siège de soupape (5) et du boîtier de soupape sont réalisés respectivement en une seule pièce de matériau avec l'autre composant adjacent respectif formant en particulier la paroi de délimitation respective, dans laquelle les coefficients de dilatation thermique du matériau pour le boîtier de soupape et du matériau pour le siège de soupape (5) sont en particulier différents.

6. Soupape de réglage (1) selon l'une des revendications précédentes, **caractérisée en ce que** le logement de joint d'étanchéité (27) est dimensionné de telle façon dans la direction axiale (A) et le joint d'étanchéité est conçu de telle façon par rapport aux dimensions du logement de joint d'étanchéité (27), qu'après le montage du joint d'étanchéité (31) dans le logement de joint d'étanchéité (27), le joint d'étanchéité (31), en particulier un corps d'étanchéité élastiquement déformable (35), est disposé à une distance axiale des deux gradins.

7. Soupape de réglage (1) selon l'une des revendications précédentes, **caractérisée en ce que** dans un état de fonctionnement normal ou immédiatement après le montage, le joint d'étanchéité (31) est disposé de telle façon dans le logement de joint d'étanchéité (27), qu'une liberté de contact est assurée par rapport aux deux gradins (17, 23).

8. Soupape de réglage (1) selon l'une des revendications précédentes, **caractérisée en ce que** le logement de joint d'étanchéité (27) est dimensionné de telle façon dans la direction axiale (A) et le joint d'étanchéité est conçu de telle façon par rapport aux dimensions du logement de joint d'étanchéité (27), qu'après le montage du joint d'étanchéité (31) dans le logement de joint d'étanchéité (27), le joint d'étanchéité (31), en particulier un corps d'étanchéité élastiquement déformable (35), peut se dilater et/ou se déplacer dans les deux directions axiales (A) opposées dans le logement de joint d'étanchéité (27), sans entrer en contact axial avec les gradins du boîtier de soupape et du siège de soupape (5) s'étendant dans la direction radiale et délimitant le logement de joint d'étanchéité (27) dans la direction longitudinale axiale, dans laquelle, en particulier après le montage du joint d'étanchéité (31), celui-ci est en contact d'étanchéité périphérique complet avec les deux parois de délimitation, dans laquelle, lors d'un déplacement et/ou d'une dilatation du joint d'étanchéité (31) dans la direction axiale (A), le contact d'étanchéité est maintenu.

9. Soupape de réglage (1) selon l'une des revendications précédentes, **caractérisée en ce que** la somme des deux distances axiales est déterminée par une différence de dilatation thermique avec différents coefficients de dilatation thermique du siège de soupape (5) et du boîtier de soupape, en particulier avec une différence de température de fonctionnement définie.

10. Soupape de réglage (1) selon l'une des revendications précédentes, **caractérisée en ce que** dans l'état monté l'un sur l'autre de la cage de soupape et du boîtier de soupape, le logement de joint d'étanchéité en forme de rainure annulaire (27) s'étendant dans la direction radiale et les parois de délimitation du siège de soupape (5) et du boîtier de soupape assurant une délimitation dans la direction radiale (R) sont disposés de façon cylindrique et concentrique entre eux, dans laquelle les surfaces de paroi cylindriques sont en particulier exemptes d'évidements, de sorte que le joint d'étanchéité (31) peut être déplacé le long de la paroi de délimitation respective.

11. Soupape de réglage (1) selon l'une des revendications précédentes, **caractérisée en ce qu'**une paroi intérieure de délimitation (25) du logement de joint d'étanchéité, en particulier attribuée au siège de soupape (5), se termine d'une part au niveau du gradin faisant saillie radialement vers l'extérieur et se termine d'autre part au niveau d'une extrémité axiale du composant formant la paroi intérieure de délimitation (25), tel que du siège de soupape (5) ou du boîtier de soupape, avec un étage faisant saillie radialement vers l'intérieur, de telle façon que le joint d'étanchéité (31) peut être placé à l'extrémité axiale dans le logement de joint d'étanchéité (27), et/ou **en ce qu'**une paroi extérieure de délimitation (21) du logement de joint d'étanchéité (27), en particulier attribuée au boîtier de soupape, se termine d'une part au niveau du gradin (17) faisant saillie radialement vers l'intérieur et se termine d'autre part au niveau d'une extrémité axiale du composant formant la paroi extérieure de délimitation (21), tel que du boîtier de soupape ou du siège de soupape (5), avec un étage faisant saillie radialement vers l'extérieur, de telle façon que le joint d'étanchéité (31) peut être placé essentiellement sans dilatation radiale au niveau de l'extrémité axiale dans le logement de joint d'étanchéité (27).

12. Soupape de réglage (1) selon l'une des revendications précédentes, **caractérisée en ce qu'**à la suite du logement de joint d'étanchéité (27) et/ou à côté de celui-ci, une section de montage est formée respectivement sur le siège de soupape (5) et le boîtier de soupape, pour fixer solidement la cage de soupape sur le boîtier de soupape.

13. Soupape de réglage (1) selon l'une des revendications précédentes, **caractérisée en ce que** le joint d'étanchéité présente un corps d'étanchéité (35) sous la forme d'une bague d'étanchéité réalisée en une matière polymère, telle que le PTFE, et/ou en un métal, dans laquelle la bague d'étanchéité présente en particulier une section transversale essentiellement en forme de O, en forme de C, en forme de V ou en forme de U, dans laquelle le joint d'étanchéité (31) comporte en particulier un ressort d'écartement (41) réalisé en un matériau rigide, tel que le plastique, le métal ou autres, lequel précontraint le corps d'étanchéité contre les parois de délimitation du logement de joint d'étanchéité (27) pour former une ligne d'étanchéité périphérique, le ressort d'écartement (41) présentant en particulier une section transversale essentiellement en forme de O, en forme de C, en forme de V ou en forme de U.
